# EUROPÄISCHE PATENTSCHRIFT

(11) **EP 0 324 972 B1**
(45) Veröffentlichungstag und Bekanntmachung des Hinweises auf die Patenterteilung: **05.05.1993**
(21) Anmeldenummer: 88121615.4
(22) Anmeldetag: 23.12.1988
(51) Int. Cl.: C04B 35/00, C25D 1/14, H01M 10/39, B28B 1/26, C04B 35/10

(54) **Verfahren zur Herstellung eines Formkörpers aus Oxidkeramik**
Process for the production of a shaped article of oxide ceramics
Procédé pour la production d'un corps moulé en céramique oxide

(30) Priorität: 19.01.1988 DE 3801328
(43) Veröffentlichungstag der Anmeldung: 26.07.1989
(73) Patentinhaber: Asea Brown Boveri Aktiengesellschaft, 68309 Mannheim (DE)
(72) Erfinder: Neeff, Rainer, D-6078 Neu-Isenburg (DE); Lindman, Evi, D-6906 Leimen 2 (DE); Herschel, Philipp, D-6806 Viernheim (DE)
(74) Vertreter: Rupprecht, Klaus, Dipl.-Ing.

(56) Entgegenhaltungen:
- DD-A- 226 308
- US-A- 3 896 018
- US-A- 4 073 711
- US-A- 4 121 987

## Beschreibung

Die Erfindung bezieht sich auf ein Verfahren zur Herstellung eines Formkörpers aus Oxidkeramik nach dem Oberbegriff des Anspruchs 1.

Ein solches Verfahren ist aus der DE-OS 27 52 003 bekannt und wird beispielsweise zur Herstellung ionenleitender Keramiken benutzt. Eine typische Anwendung ist die Herstellung von Festelektrolytkörper für Natrium/-Schwefel-Zellen in Hochtemperaturspeicherbatterien zur Speicherung elektrischer Energie.

Übliche Formkörper für solche Batterien haben die Form einseitig geschlossener Rohre. Aus der DE-OS 27 52 003 und den darin gewürdigten Druckschriften sind mehrere Verfahren zur Herstellung solcher z.B. natrium-ionenleitender Formkörper aus Oxidkeramiken, insbesondere Alpha-Aluminiumoxid und Beta-Aluminiumoxid bekannt. Zu den bekannten Verfahren zählt insbesondere die direkte naßchemische Formgebung durch elektrophoretische Abscheidung aus einer Suspension.

Bei dem bekannten Verfahren wird durch Mahlen ein feines Pulver aus Beta-Aluminiumoxid-Teilchen hergestellt, deren Mehrzahl einen Durchmesser im Bereich von 1 bis 2µm aufweist. Zur Herstellung der Suspension wird außer dem Pulver ein organisches Lösungsmittel benutzt. Die Suspension wird in einen Behälter gegeben, der zugleich eine der Elektroden einer Einrichtung zur elektrophoretischen Abscheidung ist. Die zweite Elektrode ist ein Dorn, der in die Suspension eintaucht. An die Elektroden wird eine Gleichspannung angelegt. Auf dem Dorn wird die Oxidkeramik abgeschieden und einige Zeit getrocknet. Danach wird der getrocknete Körper von dem Dorn genommen und bei einer Temperatur zwischen 1500 und 1775°C gesintert um einen dichten gesinterten Formkörper zu erhalten.

Obwohl bekannt ist, daß das Entfernen des getrockneten Formkörpers von dem Dorn nicht problemlos ist, wie z.B. in der US-PS 38 96 018 in Spalte 7 und 8 beschrieben, erfolgt bei allen gattungsgemäßen Verfahren eine Abscheidung auf einer dornförmigen Elektrode. Es hat sich gezeigt, daß während der Trocknung und des damit verbundenen Schrumpfungsprozesses Strukturveränderungen und feine Risse entstehen können, die die spätere Funktionstüchtigkeit des Formteils beeinträchtigen.

Davon ausgehend liegt der Erfindung die Aufgabe zugrunde, ein verbessertes Verfahren zur Herstellung von Formkörpern aus Oxidkeramik anzugeben.

Diese Aufgabe wird bei einem Verfahren zur Herstellung eines Formkörpers aus Oxidkeramik gemäß dem Oberbegriff des Anspruchs 1 durch dessen kennzeichnende Merkmale gelöst.

Vorteilhafte Ausgestaltungen des Verfahrens sind in Unteransprüchen angegeben.

Durch den erfindungsgemäßen Vorschlag, eine elektrophoretische Abscheidung von Metalloxid an der Innenseite einer Elektrode herbeizuführen, wird eine Rißbildung durch Schrumpfung während des Trocknungsvorgangs vermieden. Das Ablösen des abgeschiedenen Formkörpers wird durch eine vorzugsweise leicht konische Ausführung der Hohlelektrode erleichtert. Gemäß einer vorteilhaften Ausgestaltung des Verfahrens wird eine Suspension mit sehr feinen Teilchen verwendet, nämlich mit Oxidkeramikteilchen, deren Merhzahl einen Durchmesser von deutlich unter 1µm, typisch 0,6µm, aufweist.

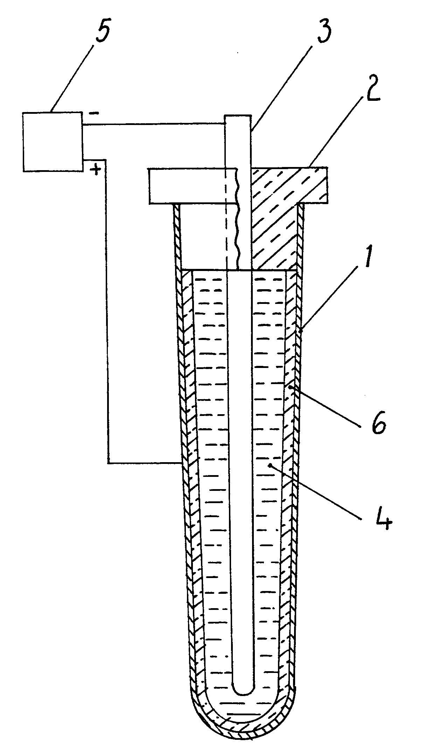

Die Erfindung wird anhand eines Ausführungsbeispiels und der Zeichnung näher beschrieben.

In der Zeichnung ist unmaßstäblich und vereinfacht eine Anordnung zur Durchführung des erfindungsgemäßen Verfahrens dargestellt. Dabei wird eine Hohlelektrode 1 verwendet, die an die Form des herzustellenden oxidkeramischen Formkörpers 6, z.B. eines fingerförmigen Elektrolytkörpers für eine Natrium/Schwefel-Batterie angepaßt ist. Die Hohlelektrode 1 ist nicht exakt zylindrisch, sondern leicht konisch ausgeführt, wobei der engere untere Teil mit einer Halbkugel-Schale abgeschlossen ist. Die Hohlelektrode 1 (Anode) ist aus Edelstahl hergestellt. Am oberen Ende ist die Hohlelektrode 1 mit einem elektrisch isolierenden Deckel 2 abgeschlossen. Der dargestellte Formkörper 6 wird bei einer vorgesehenen Verwendung als Festkörper-Elektrolyt aus Beta-Aluminiumoxid hergestellt. In gleicher Weise sind jedoch auch Formkörper aus Alpha-Aluminiumoxid herstellbar. Die weitere Beschreibung bezieht sich auf eine Suspension mit Alpha-Aluminiumoxidteilchen.

Als Gegenelektrode (Kathode) ist ein Dorn 3 verwendet, der durch den Deckel 2 geführt ist und in den von der Hohlelektrode 1 gebildeten Raum ragt. Der Dorn 3 besteht ebenso wie die Hohlelektrode 1 aus Edelstahl, z.B. V2A-Stahl.

Im Innenraum der Hohlelektrode 1 befindet sich eine Suspension 4, die vorteilhaft nach einem chemischen Dispergierverfahren aus Alpha-Aluminiumoxid unter Verwendung einer Kombination von Dispersionsmittel und Dispergiermittel hergestellt wird. Damit läßt sich eine sehr feine und stabile Suspension 4 mit Alpha-Aluminiumoxidteilchen herstellen, deren Mehrzahl einen Durchmesser unterhalb von 1µm aufweist. Der Gewichtsanteil der festen Oxidkeramik in der Suspension beträgt etwa 25 bis 50%. Die Teilchen sind in einer organischen Flüssigkeit, z.B. Ethanol, vorhanden, welche bei 25°C eine Dielektrizitätszahl von 12 bis 25 und eine spezifische Leitfähigkeit von 10⁻⁷ bis 10⁻⁴ Scm⁻¹ aufweist.

Als Dispergiermittel kann eine Menge von etwa 0,5 bis 2 Gewichts-% - bezogen auf den oxidkeramischen Feststoff - Polyacrylsäureharz verwendet werden. Das Polyacrylsäureharz hat neben der stabilisierenden Wirkung gleichzeitig die Eigenschaft, durch Adsorption auf der Oberfläche der Keramikpartikel als Ladungsträger bei der elektrophoretischen Abscheidung der Keramikpartikel zu fungieren und als Binder die Festigkeit des so abgeschiedenen ungebrannten Formkörpers 6 (Grünling) zu erhöhen.

Die Polung der Gleichspannungsquelle ist so gewählt, daß eine Abscheidung der Oxidkeramik als Formkörper 6 auf der Innenseite der Hohlelektrode 1 erfolgt.

Die erforderlichen Verfahrensschritte sind nachstehend anhand eines Beispiels beschrieben.
a) Herstellen der Suspension:
   1,2 Gew.-% Polyacrylsäureharz (bezogen auf Alpha-Al₂O₃) werden unter Rühren in Ethanol gelöst und dann unter Rühren 50 Gew.-% Alpha-Al₂O₃-Pulver (bezogen auf den Gesamt-Ansatz) mit einem mittleren Korndurchmesser von 0,6µm langsam zugegeben. Anschließend wird der Ansatz unter Rühren und Kühlung mit einem Ultraschallrüssel 15 Min. beschallt.
b) Einfüllen der Suspension in die Hohlelektrode:
   Nach 6 Stunden Vorsedimentationszeit wird die Suspension in eine einseitig verschlossene konische Hohlelektrode dekantiert.
c) Herstellung eines Formkörpers als Grünling durch Abscheidung von oxidkeramischem Material aus der Suspension an der Innenseite der Hohlelektrode:
   Während einer Zeitspanne von 20 Minuten bei einer elektrischen Feldstärke von 17V · cm⁻¹ und einem Strom von 1mA wird ein Rohr mit einer Wandstärke von 1,3mm (grün) elektrophoretisch abgeschieden.
d) Trocknen und Sintern des Formkörpers:
   Es erfolgt entweder nur eine Trocknung an Luft oder eine kurze Vortrocknung an Luft mit anschließender Trocknung im Trockenofen, bei z.B. 50°C. Die Trockenzeit hängt von den Geometrie-Verhältnissen ab, typisch ist eine mehrstündige bis zweitägige Trocknung an Luft. Bei einer etwa halbstündigen Trocknung im Ofen kann eine etwa 5-minütige Vortrocknung an Luft genügen. Anschließend wird in Luft bei 1500 bis 1700°C gesintert bis Dichtigkeit des Körpers erreicht ist. Es entsteht ein dichter, feinkörniger, homogener, gesinterter Formkörper.

## Patentansprüche

1. Verfahren zur Herstellung eines Formkörpers aus Oxidkeramik durch naßchemische Formgebung, wobei
- eine Suspension aus kleinen, elektrisch geladenen Metalloxidteilchen hergestellt wird,
- die Suspension in eine Hohlelektrode dekantiert wird und in die Suspension ein Dorn als Gegenelektrode getaucht ist,
- in dieser Anordnung eine elektrophoretische Abscheidung an einer der Elektroden durch Anlegen einer Gleichspannung an die Elektroden durchgeführt wird,
- der sich an einer Elektroden bildende Niederschlag getrocknet wird,
- der so elektrophoretisch abgeschiedene Formkörper von der Elektrode entfernt wird und
- bei einer Temperatur zwischen 1500 und 1700°C gesintert wird, wodurch ein dichter, feinkörniger Formkörper entsteht,
dadurch gekennzeichnet, daß die Abscheidung des in der Suspension enthaltenen Metalloxids an der Innenseite der Hohlelektrode durchgeführt wird.

2. Verfahren nach Anspruch 1, dadurch gekennzeichnet, daß die Suspension 25 bis 50 Gew.-% an fester Oxidkeramik enthält, wobei die Mehrzahl der Teilchen einen Durchmesser von 1µm aufweist und die Teilchen in einer organischen Flüssigkeit vorhanden sind, welche bei 25°C eine Dielektrizitätszahl von 12 bis 25 und eine spezifische Leitfähigkeit von 10⁻⁷ bis 10⁻⁴ Scm⁻¹ aufweist.

3. Verfahren nach Anspruch 1 oder 2, dadurch gekennzeichnet, daß die suspendierte Oxidkeramik Alpha-Al₂O₃ ist oder in einer Aluminiumoxidmasse auch Beta-Al₂O₃ enthält.

4. Verfahren nach Anspruch 2 oder 3, dadurch gekennzeichnet, daß als organische Flüssigkeit Ethanol verwendet wird.

5. Verfahren nach einem der Ansprüche 1 bis 4, dadurch gekennzeichnet, daß die Suspension als Dispergiermittel auf den oxidkeramischen Feststoff bezogen etwa 0,5 bis 2 Gew.-% Polyacrylsäureharz enthält.

6. Verfahren nach einem der Ansprüche 1 bis 5, dadurch gekennzeichnet, daß eine Hohlelektrode verwendet wird, die konisch ausgeführt ist.

7. Verfahren nach einem der Ansprüche 1 bis 6, dadurch gekennzeichnet, daß eine Hohlelektrode aus rostfreiem Edelstahl, z.B. V2A- oder V4A-Stahl, verwendet wird, die an ihrer engeren Seite verschlossen ist und daß als Gegenelektrode ein daran angepaßter Massiv-Dorn aus Edelstahl verwendet wird.

8. Verfahren nach einem der Ansprüche 1 bis 7, dadurch gekennzeichnet, daß zur elektrophoretischen Abscheidung ein Gleichspannungsfeld von 10 bis 1000Vcm⁻¹ verwendet wird.

9. Verfahren nach einem der Ansprüche 1 bis 8, dadurch gekennzeichnet, daß das Trocknen des Formteils an Luft erfolgt.

10. Verfahren nach einem der Ansprüche 1 bis 9, dadurch gekennzeichnet, daß das Sintern des Formteils an Luft erfolgt.

## Claims

1. Process for producing a moulded body of oxide ceramic by wet-chemical moulding in which
- a suspension of small, electrically charged metal oxide particles is produced,
- the suspension is decanted into a hollow electrode and a rod is immersed in the suspension as counter-electrode,
- an electrophoretic deposition is carried out in this arrangement at one of the electrodes by applying a direct voltage to the electrode,
- the precipitate which forms at one electrode is dried,
- the moulded body thus deposited electrophoretically is removed from the electrode and
- is sintered at a temperature between 1500 and 1700^{o}C, as a result of which a dense, fine-grained moulded body is produced,
characterized in that the deposition of the metal oxide contained in the suspension is carried out on the inside of the hollow electrode.

2. Process according to Claim 1, characterized in that the suspension contains 25 to 50 % by weight of solid oxide ceramic, the majority of the particles having a diameter of 1 µm and the particles being present in an organic liquid which has a relative permittivity of 12 to 25 and a specific conductivity of 10⁻⁷ to 10⁻⁴ S.cm⁻¹ at 25^{o}C.

3. Process according to Claim 1 or 2, characterized in that the suspended oxide ceramic is α-Al₂O₃ or also contains β-Al₂O₃ in an aluminium oxide compound.

4. Process according to Claim 2 or 3, characterized in that ethanol is used as organic liquid.

5. Process according to one of the Claims 1 to 4, characterized in that the suspension contains, as dispersing agent, about 0.5 to 2 % by weight of polyacrylic acid resin referred to the oxide ceramic solid.

6. Process according to one the Claims 1 to 5, characterized in that a hollow electrode is used which is of conical construction.

7. Process according to one of the Claims 1 to 6, characterized in that a hollow electrode of stainless high-grade steel, for example V2A or V4A steel, which is closed at its narrower end, is used and in that a solid rod of high-grade steel matched thereto is used as counter-electrode.

8. Process according to one of the Claims 1 to 7, characterized in that a direct voltage field of 10 to 1000 V.cm⁻¹ is used for electrophoretic deposition.

9. Process according to one of the Claims 1 to 8, characterized in that the drying of the moulded part is carried out in air.

10. Process according to one of the Claims 1 to 9, characterized in that the sintering of the moulded part is carried out in air.

## Revendications

1. Procédé de fabrication d'un corps moulé en céramique oxydée par formage par un procédé chimique par voie humide dans lequel
- on prépare une suspension de particules d'oxydes métalliques de petites dimensions chargées électriquement,
- on fait décanter la suspension dans une électrode creuse et, comme contre-électrode, on plonge une tige dans la suspension,
- dans ce dispositif, on réalise un dépôt par électrophorèse sur l'une des électrodes en appliquant une tension continue aux électrodes,
- on sèche le dépôt formé sur une électrode,
- on retire de l'électrode le corps formé par électrophorèse et
- on le fritte à une température comprise entre 1500 et
1700 °C pour obtenir un corps moulé dense à grain fin, caractérisé par le fait qu'on réalise le dépôt de l'oxyde métallique contenu dans la suspension sur la face intérieure de l'électrode creuse.

2. Procédé selon la revendication 1, caractérisé par le fait que la suspension contient de 25 à 50 % en poids de céramique oxydée solide, la majeure partie des particules présentant un diamètre de 1 µm et les particules étant placées dans un liquide organique dont la constante diélectrique à 25 °C est comprise entre 15 et 25 et dont la conductivité est comprise entre 10⁻⁷ et 10⁻⁴.

3. Procédé selon la revendication 1 ou 2, caractérisé par le fait que la céramique oxydée en suspension est de l'alpha-Al₂O₃ ou contient du beta-Al₂O₃ noyé dans une masse d'oxyde d'aluminium.

4. Procédé selon la revendication 2 ou 3, caractérisé par le fait que l'on utilise de l'éthanol comme liquide organique.

5. Procédé selon l'une des revendication 1 à 4, caractérisé par le fait que la suspension contient comme agent de dispersion 0,5 à 2 % en poids de résine de poly (acide acrylique) rapporté au composant solide céramique oxydée.

6. Procédé selon l'une des revendications 1 à 5, caractérisé par le fait que l'on utilise une électrode creuse conique.

7. Procédé selon l'une des revendications 1 à 6, caractérisé par le fait que l'on utilise une électrode creuse en acier allié inoxydable, par exemple en acier V2A ou V4A, qui est fermée à son extrémité rétrécie et par le fait que le l'on utilise comme contre-électrode une tige massive en acier allié adaptée à l'électrode creuse.

8. Procédé selon l'une des revendications 1 à 7, caractérisé par le fait que l'on utilise pour le dépôt par électrophorèse un champ électrique continu de 10 à 1000 Vcm⁻¹.

9. Procédé selon l'une des revendications 1 à 8, caractérisé par le fait le séchage de l'élément moulé a lieu à l'air.

10. Procédé selon l'une des revendications 1 à 9, caractérisé par le fait que le frittage de l'élément moulé a lieu à l'air.
